# FASCICULE DE BREVET EUROPEEN

(11) **EP 2 438 386 B1**
(45) Date de publication et mention de la délivrance du brevet: **07.08.2013**
(21) Numéro de dépôt: 10734225.5
(22) Date de dépôt: 04.06.2010
(51) Int. Cl.: F41G 7/32, B65H 61/00, G01C 22/00, G01M 11/00, G01B 11/02, G01B 7/02

(54) **SYSTÈME DE DÉTERMINATION DE LA LONGUEUR DE FIBRE OPTIQUE DÉVIDÉE/RESTANTE DANS UNE BOBINE DE STOCKAGE LOGÉE NOTAMMENT DANS UNE ARME SOUS-MARINE**
SYSTEM ZUR BESTIMMUNG DER LÄNGE EINER AUF EINER SPEICHERWINDE VERBLEIBENDEN BZW. VON EINER SPEICHERWINDE GEWICKELTEN OPTISCHEN FASER IN EINER UNTERWASSERWAFFE
SYSTEM FOR DETERMINING THE LENGTH OF AN OPTICAL FIBER UNWOUND FROM/REMAINING ON A STORAGE REEL PARTICULARLY HOUSED IN AN UNDERWATER WEAPON

(30) Priorité: 04.06.2009 FR 0953690
(43) Date de publication de la demande: 11.04.2012
(73) Titulaire: DCNS, 75015 Paris (FR)
(72) Inventeur: LE DARD, Michel, 83120 Sainte Maxime (FR); VANDENBUSSCHE, Noël, 83310 Cogolin (FR)
(74) Mandataire: Blot, Philippe Robert Emile
(86) Numéro de dépôt international: PCT/FR2010/051096
(87) Numéro de publication internationale: WO 2010/139907

(56) Documents cités:
- EP-A1- 0 693 670
- DE-C1- 4 414 737
- US-A1- 2004 075 585
- US-A1- 2009 097 014

## Description

La présente invention concerne un système de détermination de la longueur de fibre optique dévidée/restante dans une bobine de stockage logée notamment dans une arme sous-marine.

D'une façon générale, les documents US 2004/0075585, EP 0 693 670, DE 44 14 737 et US 2009/0097014 décrivent pour certains des systèmes de détermination de longueur de fibres optiques et pour les autres des systèmes de suivi d'arme.

Une arme sous-marine est par exemple formée par une torpille ou toute autre forme de missile sous-marin ou à changement de milieu tirée ou lancée à partir d'un engin sous-marin, tel qu'un sous-marin proprement dit.

L'extrémité libre de la fibre est reliée au sous-marin et lors des déplacements de la torpille, la fibre se dévide alors de la bobine de l'arme et sert de support de transmission d'informations entre l'engin et l'arme pour assurer, par exemple, le fibroguidage de l'arme pendant au moins une partie de ses déplacements en direction par exemple d'une cible.

D'une façon générale, il est connu d'utiliser la longueur d'un fil déroulée derrière une torpille pour connaître la distance parcourue par celle-ci depuis son lancement et en particulier ceci a été appliqué aux torpilles filoguidées qui dévident derrière elles un fil de cuivre.

Le revêtement de ce fil de cuivre présente alors des moyens magnétiques à intervalle régulier, qui permettent lors du dévidage du fil, de compter des tops lors du passage de ces moyens devant des capteurs correspondants de la torpille, et donc de reconstituer la distance parcourue par l'arme.

Cependant, ces structures présentent un certain nombre d'inconvénients, notamment en matière de précision et de coût.

En effet, l'application sur le fil de cuivre ou tout autre type de câble dont les câbles optiques de moyens magnétiques à intervalle régulier, présente un coût relativement important, et qui est d'autant plus élevé que la précision requise est élevée.

En effet, plus la précision requise est élevée, plus il convient de placer des moyens magnétiques correspondants sur le fil.

On conçoit que ceci est relativement coûteux.

Le but de l'invention est donc de résoudre ces problèmes.

A cet effet l'invention a pour objet un système de détermination de la longueur de fibre optique dévidée/restante dans au moins une bobine de stockage, la fibre servant de support de transmission d'informations entre une arme et un engin sous-marin à partir duquel l'arme a été tirée, caractérisé en ce qu'il comporte :
- des moyens de mesure de la puissance lumineuse rétro-diffusée dans la fibre,
- des moyens d'analyse de ce signal de puissance, pour détecter une discontinuité de puissance lumineuse rétro-diffusée correspondant à l'endroit de la fibre où celle-ci quitte la bobine,
- des moyens de localisation de cet endroit le long de la fibre, et
- des moyens de détermination à partir de cette localisation et de la longueur de fibre initialement enroulée dans la bobine, de la longueur de fibre dévidée/restante sur la bobine.

Selon d'autres aspects de l'invention le système de détermination comprend l'une ou plusieurs des caractéristiques suivantes :
- les moyens de mesure, d'analyse, de localisation et de détermination sont associés à une bobine de stockage intégrée dans l'arme et/ou l'engin sous-marin,
- il comporte en outre des moyens de calcul de la vitesse de déplacement de l'arme,
- il est associé en outre à un calculateur de trajectoire,
- l'arme sous-marine est une torpille,
- l'engin sous-marin est un sous-marin proprement dit.

L'invention sera mieux comprise à l'aide de la description qui va suivre, donnée uniquement à titre d'exemple et faite en se référant aux dessins annexés, sur lesquels :
- la figure 1 représente un schéma synoptique d'une arme sous-marine intégrant un système de détermination selon l'invention,
- la figure 2 illustre le fonctionnement de celui-ci, et
- la figure 3 représente un schéma synoptique d'un sous-marin intégrant un système de détermination selon l'invention.

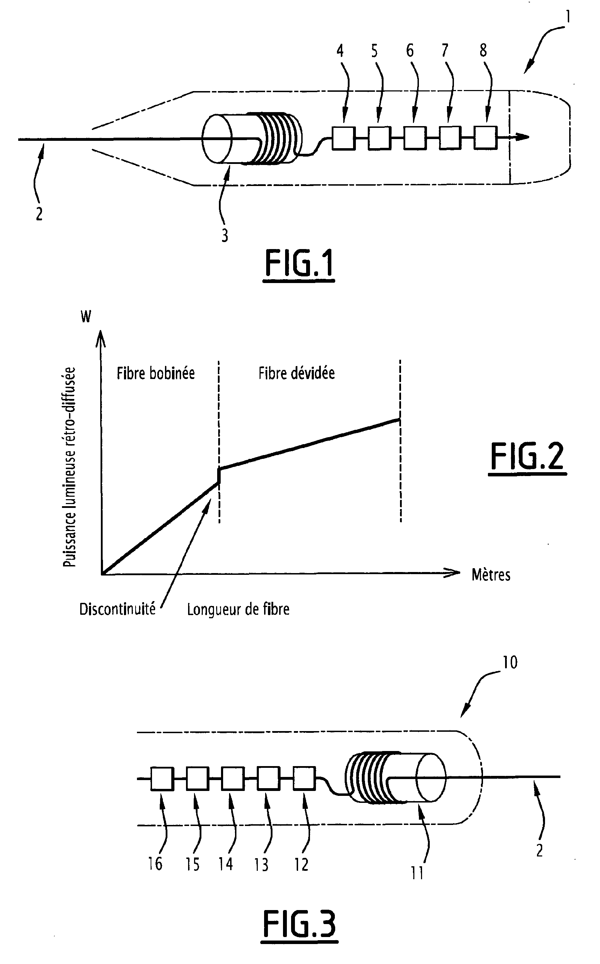

On a en effet illustré sur la figure 1, de façon synoptique, une arme sous-marine telle que par exemple une torpille désignée par la référence générale 1.

Bien entendu toute autre forme de missile sous-marin ou à changement de milieu peut être envisagée.

Cette torpille est par exemple lancée ou tirée à partir d'un engin sous-marin tel qu'un sous-marin et dévide dans son sillage une fibre telle que par exemple la fibre désignée par la référence générale 2, à partir d'une bobine désignée par la référence générale 3 de stockage, logée dans l'arme sous-marine.

L'extrémité libre de la fibre est reliée à l'engin sous-marin.

Comme cela a été indiqué précédemment, cette fibre est destinée à servir de support de transmission d'informations entre l'engin et l'arme et est, en particulier, destinée à permettre le fibroguidage de l'arme à partir de l'engin sous-marin de façon classique.

En fait, le système selon l'invention comporte des moyens de mesure de la puissance lumineuse rétro-diffusée dans la fibre, ces moyens étant désignés par la référence générale 4 sur cette figure et étant disposés dans l'arme pour être reliés à l'extrémité correspondante de la fibre.

La sortie de ces moyens de mesure est reliée à des moyens d'analyse de ce signal de puissance pour détecter une discontinuité de puissance lumineuse rétro-diffusée correspondant à l'endroit de la fibre où celle-ci quitte la bobine de stockage dans l'arme.

Ces moyens sont désignés par la référence générale 5 et la discontinuité est illustrée sur la figure 2. Celle-ci correspond à l'endroit où la fibre 2 quitte la bobine 3 et résulte de propriétés intrinsèques à la fibre comme cela est connu en soi.

Ceci permet alors à des moyens 6 de localisation de cet endroit le long de la fibre, de délivrer cette information à des moyens de détermination, à partir de cette localisation et de la longueur de fibre initialement enroulée sur la bobine, de la longueur de fibre dévidée/restante sur la bobine.

Ces moyens de détermination sont désignés par la référence générale 7 sur cette figure et permettent alors de calculer une information de distance parcourue, en temps réel, par exemple par la torpille depuis son tir ou son lancement de l'engin sous-marin.

Des moyens 8 de calcul de la vitesse de cette torpille à partir de la variation de position de la discontinuité, peuvent également être envisagés.

On conçoit qu'une telle structure présente un certain nombre d'avantages, notamment au niveau de l'augmentation des performances du système de détermination par rapport aux moyens magnétiques de l'état de la technique en termes notamment de précision et de coût.

En particulier une telle structure permet d'augmenter la précision de calcul de la position en temps réel de l'arme.

Les informations de distance parcourue et de vitesse peuvent être communiquées à un calculateur de trajectoire associé au système.

De plus, l'information est délivrée en continu et non pas pas par pas de plusieurs centaines de mètres, comme c'était le cas avec les moyens magnétiques.

Le coût de production en série est nul pour la fibre car aucune intervention n'est requise et aucun moyen supplémentaire n'est requis sur celle-ci, le système mettant en oeuvre une propriété intrinsèque de la fibre qui est donc la mise en évidence d'une discontinuité de la puissance lumineuse rétro-diffusée à l'endroit où la fibre quitte la bobine pour être libérée dans le sillage de la torpille.

En fait, cette propriété a déjà été utilisée dans l'état de la technique pour détecter des défauts de la fibre.

Dans le système selon l'invention, le coude formé par la fibre à l'endroit où elle quitte la bobine provoque en effet cette discontinuité du fait de l'enroulement de la fibre sur une bobine d'axe parallèle ou confondu avec l'axe longitudinal de l'arme.

Bien entendu, d'autres modes de réalisation encore peuvent être envisagés.

Ainsi par exemple et comme cela est représenté sur la figure 3, des moyens analogues peuvent être associés à une bobine intégrée dans l'engin sous-marin et en particulier dans un sous-marin proprement dit.

Une telle structure peut être prévue à la place ou en complément de la structure intégrée dans l'arme.

On a en effet illustré sur cette figure 3, un sous-marin désigné par la référence générale 10 à partir duquel s'étend la fibre optique 2.

Cette fibre se dévide à partir d'une bobine 11 intégrée dans le sous-marin et qui est associée à des moyens de mesure de la puissance rétro-diffusée dans la fibre désignés par la référence 12, à des moyens d'analyse 13 de ce signal, à des moyens, à des moyens 14 de localisation de la discontinuité, à des moyens 15 de localisation de l'endroit où la fibre quitte la bobine et éventuellement à des moyens 16 de calcul de la vitesse de l'arme.

Les informations de distance parcourue et de vitesse peuvent également être communiquées à un calculateur de trajectoire associé au système et alors intégré dans le sous-marin.

Bien entendu d'autres modes de réalisation encore peuvent être envisagés.

## Revendications

1. Système de détermination de la longueur de fibre optique (2) dévidée/restante dans au moins une bobine (3; 11) de stockage, la fibre (2) servant de support de transmission d'informations entre une arme (1) et un engin sous-marin (10) à partir duquel l'arme a été tirée, **caractérisé en ce qu'**il comporte :
- des moyens (4 ; 12) de mesure de la puissance lumineuse rétro-diffusée dans la fibre (2),
- des moyens (5 ; 13) d'analyse de ce signal de puissance, pour détecter une discontinuité de puissance lumineuse rétro-diffusée correspondant à l'endroit de la fibre où celle-ci quitte la bobine,
- des moyens (6 ; 14) de localisation de cet endroit le long de la fibre, et
- des moyens (7 ; 15) de détermination à partir de cette localisation et de la longueur de fibre initialement enroulée dans la bobine (3 ; 11), de la longueur de fibre dévidée/restante sur la bobine.

2. Système de détermination de la longueur de fibre optique selon la revendication 1, **caractérisé en ce que** les moyens de mesure (4 ; 12), d'analyse (5 ; 13), de localisation (6 ; 14) et de détermination (7 ; 15) sont associés à une bobine de stockage (3 ; 11) intégrée dans l'arme (1) et/ou l'engin sous-marin (10).

3. Système de détermination de la longueur de fibre optique selon l'une quelconque des revendications précédentes, **caractérisé en ce qu'**il comporte en outre des moyens de calcul (8 ; 16) de la vitesse de déplacement de l'arme.

4. Système de détermination de la longueur de fibre optique selon l'une quelconque des revendications précédentes, **caractérisé en ce qu'**il est associé en outre à un calculateur de trajectoire.

5. Système de détermination de la longueur de fibre optique selon l'une quelconque des revendications précédentes, **caractérisé en ce que** l'arme sous-marine est une torpille.

6. Système de détermination de la longueur de fibre optique selon l'une quelconque des revendications précédentes, **caractérisé en ce que** l'engin sous-marin est un sous-marin proprement dit.

## Patentansprüche

1. System zur Ermittlung der Länge einer optischen Faser (2), die von/auf wenigstens einer Vorrats-Spule (3; 11) abgewickelt/verbleibend ist, wobei die Faser (2) der Unterstützung der Übermittlung von Informationen zwischen einer Waffe (1) und einem Unterwassergerät (10) dient, von welchem ausgehend die Waffe abgeschossen worden ist, **dadurch gekennzeichnet, dass** es aufweist:
- Mittel (4; 12) zur Messung der in der Faser (2) zurückgestrahlten Lichtstärke,
- Mittel (5; 13) zur Analyse dieses Stärkesignals zum Erfassen einer Diskontinuität der rückgestrahlten Lichtstärke korrespondierend zu jener Stelle der Faser, wo diese die Spule verlässt,
- Mittel (6; 14) zur Lokalisierung dieser Stelle entlang der Faser, und
- Mittel (7; 15) zur Ermittlung, ausgehend von dieser Lokalisierung und der anfangs auf die Spule (3; 11) aufgewickelten Länge (3; 11), der Länge der Faser, die von/auf der Spule abgewickelt/verbleibend ist.

2. System zur Ermittlung der Länge der optischen Faser gemäß Anspruch 1, **dadurch gekennzeichnet, dass** die Mittel zur Messung (4; 12), zur Analyse (5; 13), zur Lokalisierung (6; 14) und zur Ermittlung (7; 15) einer Vorratsspule (3; 11) zugeordnet sind, die in die Waffe (1) und/oder in das Unterwassergerät (10) integriert ist.

3. System zur Ermittlung der Länge der optischen Faser gemäß einem der vorhergehenden Ansprüche, **dadurch gekennzeichnet, dass** es ferner Mittel zur Berechnung (8; 16) der Bewegungsgeschwindigkeit der Waffe aufweist.

4. System zur Ermittlung der Länge der optischen Faser gemäß einem der vorhergehenden Ansprüche, **dadurch gekennzeichnet, dass** es ferner mit einer Bahn-Berechnungsvorrichtung gekoppelt ist.

5. System zur Ermittlung der Länge einer optischen Faser gemäß einem der vorhergehenden Ansprüche, **dadurch gekennzeichnet, dass** die Unterwasserwaffe ein Torpedo ist.

6. System zur Ermittlung der Länge einer optischen Faser gemäß einem der vorhergehenden Ansprüche, **dadurch gekennzeichnet, dass** das Unterwassergerät ein U-Boot im eigentlichen Sinn ist.

## Claims

1. A system for determining the length of an optical fiber (2) unwound from/remaining in at least one storage reel (3; 11), the fiber (2) being used as a medium for transmitting information between a weapon (1) and an underwater vehicle (10) from which the weapon has been fired, **characterized in that** it includes:
- means (4 ; 12) for measuring the backscattered light power in the fiber (2),
- means (5 ; 13) for analyzing this power signal, for detecting a backscattered light power discontinuity corresponding to the location of the fiber where the latter leaves the reel,
- means (6 ; 14) for localizing this location along the fiber, and
- means (7 ; 15) for determining from this localization and from the length of fiber initially wound on the reel (3 ; 11), the length of fiber unwound from/remaining on the reel.

2. The system for determining the length of an optical fiber according to claim 1, **characterized in that** the means for measuring (4;12), for analyzing (5;13), for localizing (6; 14) and for determining (7;15) are associated with a storage reel (3 ; 11) integrated into the weapon (1) and/or the underwater vehicle (10).

3. The system for determining the length of an optical fiber according to any of the preceding claims, **characterized in that** it further includes means (8 ; 16) for calculating the displacement velocity of the weapon.

4. The system for determining the length of an optical fiber according to any of the preceding claims, **characterized in that** it is further associated with a trajectory calculator.

5. The system for determining the length of an optical fiber according to any of the preceding claims, **characterized in that** the underwater weapon is a torpedo.

6. The system for determining the length of an optical fiber according to any of the preceding claims, **characterized in that** the underwater vehicle is a submarine strictly speaking.
